# EUROPÄISCHE PATENTANMELDUNG

(11) **EP 1 158 380 A2**
(43) Veröffentlichungstag der Anmeldung: **28.11.2001**
(21) Anmeldenummer: 01810428.1
(22) Anmeldetag: 01.05.2001
(51) Int. Cl.: G05B 19/427, B25J 9/16

(54) **Steuervorrichtung und Verfahren zu Vorgabe eines Sollwerts**

(30) Priorität: 05.05.2000 DE 10021676
(71) Anmelder: ABB RESEARCH LTD., 8050 Zürich (CH)
(72) Erfinder: Meriot, Oliver, 70400 Chalonvillars (FR)
(74) Vertreter: ABB Patent Attorneys

(57) **Zusammenfassung**

Eine Steuervorrichtung (6) und Verfahren dienen zur Vorgabe eines realen Sollwertes (8) an ein Regelsystem (3). Sie weisen einen manuell bedienbaren Bedienungshebel (1) und eine Messeinheit (2) zur Bestimmung des realen Sollwertes (8) nach Massgabe einer realen Steuerposition (p_r) des Bedienungshebels (1) auf. Dabei weist die Steuervorrichtung (6) eine Stelleinheit (5) zur Einstellung einer idealen Steuerposition (p_i) des Bedienungshebels (1) nach Massgabe eines zeitlich veränderlichen idealen Sollwerts (7) auf. Der ideale Sollwert (7) wird durch eine Optimierung (4) erzeugt.

Dadurch wird es möglich, den Bedienungshebel (1) und damit den realen Sollwert (8) entsprechend dem idealen Sollwert (7) einzustellen, wobei eine Bedienperson gleichwohl den Bedienungshebel (1) und damit den realen Sollwert (8) verstellen kann. Anhand der realen Position (p_r) des Bedienhebels (1) spürt die Bedienperson Änderungen des idealen Sollwertes (7). Im Normallfall lässt die Bedienperson Bewegungen des Bedienhebels (1) entsprechend dem idealen Sollwert (7) zu, hat aber immer die Möglichkeit, in einem Ausnahmefall aufgrund von unvorhergesehenen Ereignissen sofort einzugreifen.

## Beschreibung

### Technisches Gebiet

Die Erfindung bezieht sich auf das Gebiet der Steuerungstechnik Sie bezieht sich auf eine Steuervorrichtung und eine Verfahren gemäss den Oberbegriffen der Patentansprüche 1 bzw 7.

### Stand der Technik

Derartige Vorrichtungen und Verfahren sind allgemein bekannt. In Fahr- und Flugzeugen aller Art werden Sollwerte für einen Antrieb durch Bedienungshebel manuell vorgegeben, durch eine Messeinheit in elektrische Signale umgewandelt und einer Antriebsregelung übermittelt. Die Antriebsregelung bildet zusammen mit einem Antrieb ein Regelsystem, welches beispielsweise nach Massgabe des vorgegebenen Sollwerts eine Geschwindigkeit oder eine Antriebskraft des Fahrzeugs einstellt.

Unter bestimmten Umständen ist es möglich und wünschbar, optimale Sollwerte zu berechnen und dem Antrieb vorzugeben. Beispielsweise kann bei einem Schienenfahrzeug anhand von Fahrplan-, Fahrzeug- und Streckeninformationen eine optimale Fahrgeschwindigkeit oder Zugkraft errechnet werden, mit welcher der Fahrplan bei minimalem Energieverbrauch eingehalten wird oder mit welcher lagegenau angehalten werden kann. Aus Sicherheitsgründen ist es jedoch nicht wünschbar, die optimale Fahrgeschwindigkeit ohne weiteres dem Antrieb vorzugeben, da der Fahrer die Geschwindigkeit damit nicht mehr vollständig und dauernd unter Kontrolle hat.

Es sind Systeme bekannt, bei welchem einer Bedienungsperson mit optischen Mitteln sich ändernde Idealsollwerte angezeigt werden, denen nachgefahren werden soll. Dabei ist jedoch eine Konzentration auf die Anzeige notwendig, welche von anderen Aufgaben ablenkt.

### Darstellung der Erfindung

Es ist deshalb Aufgabe der Erfindung, eine Steuervorrichtung und ein Verfahren der eingangs genannten Art zu schaffen, welche einer Bedienperson erlauben, ohne Ablenkung einem vorgegebenen Idealsollwert zu folgen.

Diese Aufgabe lösen eine Steuervorrichtung und ein Verfahren mit den Merkmalen der Patentansprüche 1 bzw 7.

Die erfindungsgemässe Steuervorrichtung dient zur Vorgabe eines realen Sollwertes an ein Regelsystem und weist einen manuell bedienbaren Bedienungshebel und eine Messeinheit zur Bestimmung des realen Sollwertes nach Massgabe einer realen Steuerposition des Bedienungshebels auf. Dabei weist die Steuervorrichtung eine Stelleinheit zur Einstellung einer idealen Steuerposition des Bedienungshebels nach Massgabe eines zeitlich veränderlichen idealen Sollwerts auf.

Dadurch wird es möglich, den Bedienungshebel und damit den realen Sollwert entsprechend dem idealen Sollwert einzustellen, wobei eine Bedienperson gleichwohl den Bedienungshebel und damit den realen Sollwert verstellen kann. Anhand der realen Position des Bedienhebels spürt die Bedienperson Änderungen des idealen Sollwertes. Im Normallfall lässt die Bedienperson Bewegungen des Bedienhebels entsprechend dem idealen Sollwert zu, hat aber immer die Möglichkeit, in einem Ausnahmefall aufgrund von unvorhergesehenen Ereignissen sofort einzugreifen.

In einer bevorzugten Ausführungsform der Erfindung wirkt bei einer Abweichung der realen Steuerposition von der idealen Steuerposition eine Kraft, welche den Bedienungshebel in Richtung der idealen Steuerposition zieht. Die Kraft nimmt mit zunehmender Abweichung zu, ist aber vorzugsweise auf einen oberen Wert begrenzt. Dadurch kann die Bedienperson im Normalbetrieb eine Hand mit dem Bedienungshebel mitbewegen, muss aber im Ausnahmefall nicht gegen beliebig hohe Kräfte der Stelleinheit ankämpfen.

In einer weiteren bevorzugten Ausführungsform der Erfindung wird die Stelleinheit beim Überschreiten einer vorgegebenen Maximalkraft ausgeschaltet, so dass im Ausnahmefall die wirkende Kraft null ist und die Bedienperson völlig frei in der Bewegung des Bedienungshebels ist.

Weitere bevorzugte Ausführungsformen gehen aus den abhängigen Patentansprüchen hervor.

### Kurze Beschreibung der Zeichnungen

Im folgenden wird die Erfindung anhand bevorzugter Ausführungsbeispiele, welche in den beiliegenden Zeichnungen dargestellt sind, näher erläutert. Es zeigen:
- Figur 1: schematisch eine Struktur mit einer erfindungsgemässen Steuervorrichtung, einem dazugehörigen Regelsystem und einer Optimierungseinheit; und
- Figur 2: schematisch eine elektromechanische Struktur der erfindungsgemässen Steuervorrichtung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

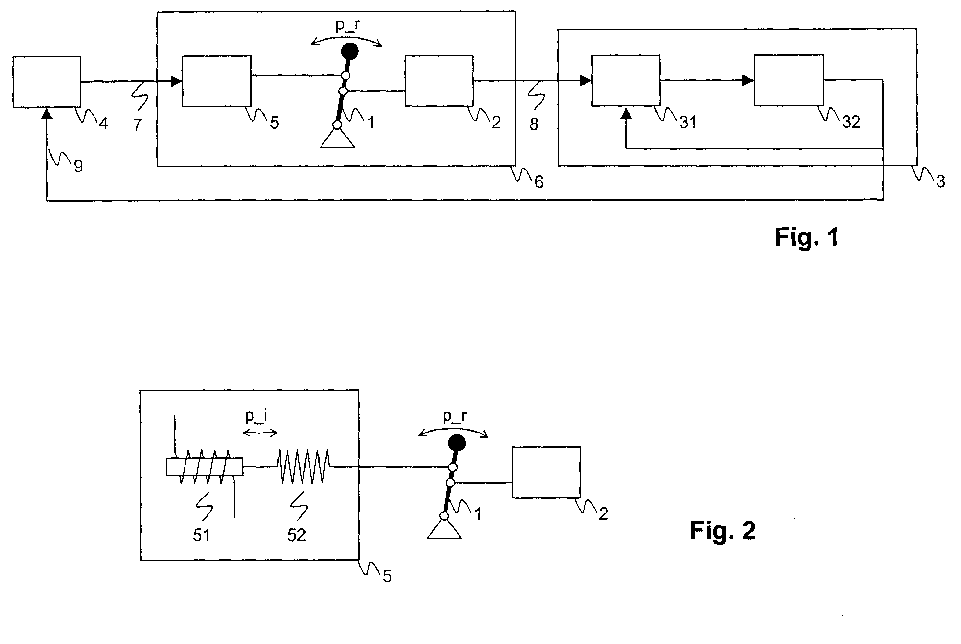

Die Figur 1 zeigt schematisch eine Struktur mit einer erfindungsgemässen Steuervorrichtung 6, einem dazugehörigen Regelsystem 3 und einer Optimierungseinheit 4 zur Erzeugung eines idealen Sollwerts 7 anhand von Prozessdaten 9. Die Steuervorrichtung 6 weist einen Bedienungshebel 1, eine Messeinheit 2 zur Erzeugung eines realen Sollwerts 8 und erfindungsgemäss eine Stelleinheit 5 auf. Das Regelsystem 3 weist einen Regler 31 und eine Regelstrecke 32 auf.

Die Erfindung funktioniert wie folgt: Die Optimierungseinheit 4 erfasst Prozessdaten 9 der Regelstrecke 32 sowie weitere Informationen über die Regelstrecke. Im Falle einer Zugsteuerung sind diese beispielsweise eine aktuelle Geschwindigkeit und Position, eine aktuelle Zeit, ein Streckenprofil, Fahrplaninformation, etc. Daraus berechnet die Optimierungseinheit 4 zur Optimierung eines Verhaltens des Regelsystems 3 einen idealen Sollwert 7, beispielsweise für die Geschwindigkeit des Zuges und übermittelt diesen der Stelleinheit 5. Die Stelleinheit 5 bestimmt nach Massgabe des idealen Sollwerts 7 eine ideale Steuerposition p_i des Bedienungshebels 1 und stellt diese ideale Steuerposition p_i ein, indem sie den Bedienungshebel 1 bewegt. Im Normalbetrieb bewegt eine Bedienperson eine Hand mit dem Bedienungshebel 1 mit, so dass eine reale Steuerposition p_r des Bedienungshebels 1 gleich der idealen Steuerposition p_i ist. Die Messeinheit 2 erfasst die reale Steuerposition p_r, bestimmt nach Massgabe der realen Steuerposition p_r einen realen Sollwert 8 und übermittelt diesen an den Regler 31. Die Messeinheit 2 weist beispielsweise einen resistiven, induktiven, kapazitiven, optoelektronischen oder magnetischen Weg- oder Winkelaufnehmer auf. Der Regler 31 regelt in bekannter Weise anhand von Prozessdaten 9 eine vorgegebene Prozessgrösse auf einen durch den realen Sollwert 8 vorgegebenen Wert. Im vorliegenden Beispiel ist dies die Geschwindigkeit des Zuges oder eine Antriebs- respektive Zugkraft.

Falls die Bedienperson manuell der Bewegung des Bedienungshebels 1 entgegenwirkt, tritt eine Abweichung der realen Steuerposition p_r von der idealen Steuerposition p_i auf. Dadurch wird vorzugsweise eine Kraft oder Rückstellkraft erzeugt, welche den Bedienungshebel 1 in Richtung der idealen Steuerposition p_i bewegt. Der reale Sollwert 8 wird anhand der realen Steuerposition p_r gebildet, so dass die Bedienperson unmittelbaren Einfluss auf den realen Sollwert 8 und auf das Verhalten des Regelsystems 3 hat.

Die Kraft wird in einer ersten Ausführungsform der Erfindung gebildet, indem die Stelleinheit 5 einen Stellantrieb 51 und ein Federelement oder eine Stellfeder 52 aufweist. Figur 2 zeigt diese Ausführungsform, wobei der Stellantrieb 51 als elektromechanischer Wandler dargestellt ist. Eine Position der Stelleinheit 5 wird hart, das heisst ohne wesentlichen Regelfehler entsprechend dem idealen Sollwert 7 geregelt. Die Position des Stellantriebs 51 wird mittels der Stellfeder 52 an den Bedienungshebel 1 übertragen. Eine Abweichung der Position des Bedienungshebels 1 von der idealen Steuerposition p_i führt nach Massgabe einer Federkonstante der Stellfeder 52 zur gewünschten Kraft auf den Bedienungshebel 1.

In einer zweiten vorteilhaften Ausführungsform der Erfindung weist die Stelleinheit 5 einen Stellantrieb 51 auf, der mechanisch inflexibel, das heisst ohne Federelement mit dem Bedienungshebel 1 gekoppelt ist. Der Stellantrieb 51 ist beispielsweise ein Elektromotor und weist eine eigene Positionmessung und eine Stellantriebsregelung auf. Die Stellantriebsregelung ist in bekannter Weise konfiguriert, so dass sich eine Antriebsregelcharakteristik mit einer vom Positionsfehler abhängigen Antriebskraft des Stellantriebs 51 ergibt. Vorzugsweise wird ein Integralanteil der Stellantriebsregelung gleich null gewählt, so dass eine dauernde Abweichung der realen Steuerposition p_r von der idealen Steuerposition p_i möglich ist.

Die Kraft der Stelleinheit 5 auf den Bedienungshebel 1 nimmt vorzugsweise mit zunehmender Abweichung der realen von der idealen Steuerposition p_i zu, beispielsweise proportional zur Abweichung oder zum Quadrat der Abweichung. Vorzugsweise ist die Kraft betragsmässig auf eine Maximalkraft begrenzt. Vorzugsweise wird beim Überschreiten einer Maximalkraft die Stelleinheit 5 ausgeschaltet respektive die Kraft auf Null gesetzt, so dass in einem Ausnahmefall der ideale Sollwert 7 wirkungslos ist und die Bedienperson völlige Freiheit in der Bewegung des Bedienungshebels 1 hat. Vorzugsweise wird auch bei einer Fehlfunktion der Optimierungseinheit 4 die Stelleinheit 5 ausgeschaltet.

In einer bevorzugten Ausführungsform der Erfindung weist der Bedienungshebel 1 einen Totmannschalter auf, um eine Anwesenheit der Bedienperson zu erfassen. Dies ist notwendig, da ansonsten ein Fahrzeugführer den Bedienungshebel 1 vollständig loslassen könnte, und die Steuerung des Fahrzeuges weiter funktionieren würde. Dies ist in üblichen Sicherheitskonzepten unerwünscht.

In weiteren bevorzugten Ausführungsformen der Erfindung wird der erfindungsgemässe Bedienungshebel 1 zur Steuerung eines Schienenfahrzeuges, eines Flugzeugs oder eines beliebigen Antriebs respektive Motors verwendet. Allgemein ist die Erfindung zur Steuerung eines Prozesses geeignet, bei dem eine dauernde Benutzerkontrolle mit einer Vorgabe von zeitlich ändernden und dauernd neu berechneten optimalen Sollwerten kombiniert ist.

Die Erfindung erlaubt es, einen kontinuierlich berechneten und sich zeitlich ändernden optimalen Sollwert 7 dem Regelsystem 3 zu übermitteln, wobei eine geistige Konzentration der Bedienperson nicht zusätzlich gefordert wird und gleichwohl eine dauernde, intuitiv unmittelbar erfassbare Überwachung des vorgegebenen optimalen Sollwerts 7 und bei Bedarf ein sofortiges Eingreifen durch den Bediener möglich sind.

### Bezugszeichenliste

- 1: Bedienungshebel
- 2: Messeinheit
- 3: Regelsystem
- 31: Regler
- 32: Regelstrecke
- 4: Optimierungseinheit
- 5: Stelleinheit
- 6: Steuervorrichtung
- 7: idealer Sollwert
- 8: realer Sollwert
- 9: Prozessdaten
- 51: Stellantrieb
- 52: Stellfeder
- p_i: ideale Steuerposition
- p_r: reale Steuerposition

## Patentansprüche

1. Steuervorrichtung (6) zur Vorgabe eines realen Sollwertes (8) an ein Regelsystem (3), wobei die Steuervorrichtung (6) einen manuell bedienbaren Bedienungshebel (1) und eine Messeinheit (2) zur Bestimmung des realen Sollwertes (8) nach Massgabe einer realen Steuerposition (p_r) des Bedienungshebels (1) aufweist, **dadurch gekennzeichnet,**
**dass** die Steuervorrichtung (6) eine Stelleinheit (5) zur Einstellung einer idealen Steuerposition (p_i) des Bedienungshebels (1) nach Massgabe eines zeitlich veränderlichen idealen Sollwerts (7) aufweist.

2. Steuervorrichtung (6) gemäss Anspruch 1, **dadurch gekennzeichnet, dass** bei einer Abweichung der realen Steuerposition (p_r) von der idealen Steuerposition (p_i) eine Kraft wirkt, welche den Bedienungshebel (1) in Richtung der idealen Steuerposition (p_i) zieht.

3. Steuervorrichtung (6) gemäss Anspruch 2, **dadurch gekennzeichnet, dass** die Stelleinheit (5) einen Stellantrieb (51) und eine Stellfeder (52) aufweist welche eine Bewegung des Stellantriebs (51) auf den Bedienungshebel (1) überträgt.

4. Steuervorrichtung (6) gemäss Anspruch 2, **dadurch gekennzeichnet, dass** die Stelleinheit (5) einen Stellantrieb (51) mit einer entsprechenden Antriebsregelcharakteristik aufweist, die zur der Kraft auf den Bedienungshebel (1) führt.

5. Steuervorrichtung (6) gemäss Anspruch 2, **dadurch gekennzeichnet, dass** die Kraft proportional zur Abweichung ist und auf einen oberen Wert begrenzt ist.

6. Steuervorrichtung (6) gemäss Anspruch 1, **dadurch gekennzeichnet, dass** die Steuervorrichtung (6) einen Totmannschalter aufweist.

7. Verfahren zur Vorgabe eines realen Sollwertes (8) an ein Regelsystem (3), wobei der reale Sollwert (8) durch eine Messeinheit (2) nach Massgabe einer realen Steuerposition (p_r) eines manuell bedienbaren Bedienungshebels (1) bestimmt wird, **dadurch gekennzeichnet,**
**dass** eine ideale Steuerposition (p_i) des Bedienungshebels (1) nach Massgabe eines zeitlich veränderlichen idealen Sollwerts (7) eingestellt wird.

8. Verfahren gemäss Anspruch 7, **dadurch gekennzeichnet, dass** bei einer Abweichung der realen Steuerposition (p_r) von der idealen Steuerposition (p_i) eine Kraft erzeugt wird, welche den Bedienungshebel (1) in Richtung der idealen Steuerposition (p_i) zieht.

9. Verfahren gemäss Anspruch 7, **dadurch gekennzeichnet, dass** die ideale Steuerposition (p_i) durch eine Optimierungseinheit (4) zur Optimierung eines Verhaltens des Regelsystems (3) erzeugt wird.

10. Verfahren gemäss Anspruch 8, **dadurch gekennzeichnet, dass**, falls die Kraft betragsmässig einen vorgegebenen Maximalwert überschreitet, die Kraft auf Null gesetzt wird.
